## Europäisches Patentamt
## European Patent Office
## Office européen des brevets

(19)

(11) Publication number: **0 093 249**
**A2**

(12)
# EUROPEAN PATENT APPLICATION

(21) Application number: **83102545.7**

(22) Date of filing: **15.03.83**

(51) Int. Cl.³: **G 06 F 15/20**

(30) Priority: **30.04.82 US 373543**

(43) Date of publication of application:
**09.11.83 Bulletin 83/45**

(84) Designated Contracting States:
**DE FR GB IT**

(71) Applicant: **International Business Machines
Corporation
Old Orchard Road
Armonk, N.Y. 10504(US)**

(72) Inventor: **Lange, Frederick Robert
14729 Shirley Bohn Rd.
Mt. Airy Maryland 21771(US)**

(72) Inventor: **Rosenbaum, Walter Steven
7420 Westlake Terrace
Bethesda Maryland 20034(US)**

(74) Representative: **Gallois, Gérard
COMPAGNIE IBM FRANCE Département de Propriété
Industrielle
F-06610 La Gaude(FR)**

(54) **System for detecting and correcting contextual errors in a text processing system.**

(57) A system for automatically proofreading a document for word use validation in a text processing system is provided by coupling a specialized dictionary of sets of homophones and confusable words to sets of di-gram and N-gram conditions whereby proper usage of the words can be statistically determined. A text document is reviewed word-by-word against a dictionary of homophones and confusable words. When a match occurs, the related list of syntactic rules is examined relative to the context of the subject homophone or confusable word. If the syntax in the immediate context of the homophone or confusable word conflicts with the prestored syntax rules, the homophone or confusable word is highlighted on the system display. The system then displays the definition of the highlighted word along with possible intended alternative forms and their respective definitions. The operator can examine the word used and the possible alternatives and make a determination as to whether an error has been made and if a correction of the text is required. If correction is required, the operator may cause the error word to be replaced by the desired word by positioning the display cursor under the desired word and depressing an appropriate key on the system keyboard.

./...

```
1          2          3          4          5          6          7
8901234567890123456789012345678901234567890123456789012345678901234567890123456789
```

TO- MR. JOHN JONES

IBM NEW YORK

MR. JONES,

     THE LETTER YOU ARE NOW READING HAS BEEN PROCESSED BY AN
AUTOMATIC PROOFREADING FUNCTION. THE INTERNAL DICTIONARY
COVERS BUSINESS, LEGAL, AND MEDICAL TERMINOLOGY. AS YOU CAN
SEE, IF A WORD IN THE DOCUMENT IS MISUSED, IT IS HIGHLIGHTED
ON THE DISPLAY SCREEN. THIS PROVIDES ASSISTANCE TO THE
PRINCIPAL OR SECRETARY WHO IS CREATING OR PROOFREADING A
DOCUMENT. ALL WORD ENTRIES ARE ALSO CHECKED FOR SPELLING
ERRORS AND HYPHENATION POINTS ARE PROVIDED FOR FORMATTING.

     AN AFFECT OF THIS FUNCTION IS THAT THE TIME NECESSARY
TO MANUALLY SCAN A DOCUMENT FOR ERRORS IS GREATLY REDUCED.

```
┌─────────────────────────────────────────┐
│  AFFECT - ACT UPON OR INFLUENCE          │
│  EFFECT - RESULT OF ACTION OR TO BRING   │
│           ABOUT                          │
└─────────────────────────────────────────┘
```

     I AM CONFIDANT THAT THE SYSTEM WILL BE OF GREAT ASSIS-
TANCE TO YOU.

     OF COARSE, NEXT TIME THAT YOU ARE IN THE GAITHERSBURG
AREA, PLEASE STOP BY.

SINCERELY YOURS,


W. ROSENBAUM

FIG. 6

# SYSTEM FOR DETECTING AND CORRECTING
# CONTEXTUAL ERRORS IN A TEXT PROCESSING SYSTEM

## DESCRIPTION

### Technical Field of the Invention

This invention relates to text processing systems and more
particularly to methods in text processing systems for automati-
cally detecting and correcting contextual errors related to
confusable words in text.

### Background Art

With the advent of office systems and the improvements in
computing power and storage, it becomes appropriate to consider
various applications which offer the operator the benefit of
the system scanning documents to find anomalies and possible
errors in the text. It has been posed in the prior art that
computer systems review documents and compute a "foggyness
factor" for the respective sentences, paragraphs and chapters.
This advises the operator on a high level how consistent and in
a bulk manner infers how lucid a composition is. Such "foggyness
factors" derive their inference based on a correlation against
sentence length, number of punctuations, length of words and
other superficial factors. The technology does not necessarily
say something is wrong, but rather how far from a postulated
ideal the author's composition style is.

Another known method for examining text for errors is to scan
the document and check each word against a spelling dictionary
to detect misspelled words. A technology suitable for mini-
processor implementation and consistent with office system
technology is disclosed in the "Digital Reference Matrix For
Word Verification", Patent US-A-3,995,254, issued 30 November
1976 to W.S. Rosenbaum. This technology determines if a word is
misspelled but not whether it is misused. No intelligence is exercised about the word, rather only about its character content.

A simple method for examining a document with contextual significance is to examine each word in the document against a dictionary composed of homophones or confusable words. Each time a word in the dictionary is encountered in the document, it is flagged and brought to the operator's attention for manual review, and if necessary, corrective intervention.

However, a major detraction of such content analysis is that for such common homophones or confusable forms as, there/their, fore/four/for", to/too/two, etc. the noise level of successive flagged words, regardless of the obviousness of their correct usage, is more of a nuisance factor than a remedial composition aid. The ability to automatically detect homophones and confusion prone words that appear to be syntactically mismatched and only prompt the operator with those suspicious cases has not been addressed in the prior art.

## Disclosure of Invention

It has been discovered that improved text proofing for purposes of word use validation in a text processing system can be achieved by coupling a specialized dictionary of sets of homophones and confusable words where each word has related to it a set of word di-gram or N-gram conditions whereby proper or improper usage of the words can be statistically determined. This system is dictionary-driven and the operator's composition is reviewed word-by-word against the dictionary of homophones and confusable words. When a match is found against the dictionary, the related list of syntactic word N-gramsis examined relative to the immediate region of text where the subject homophone or confusable word is found. If the syntax in the immediate context of the homophone or confusable word conflicts with the prestored N-gram word conditions, the homophone or confusable word is flagged for the operator on the system display. In an appropriate region of the display screen, the

3

definition of the flagged homophone or confusable word is shown
along with the spelling of the possibly intended alternate
forms with their respective definitions. The operator can then
examine the word used and the possible alternatives indicated
with their respective definitions and make the final determination as to whether an error has been made and if a correction
of the text is required. If correction is required, the operator
can cause the error word to be replaced by the desired word by
positioning the display cursor under the desired word and
depressing the appropriate key on the system keyboard.

Brief Description of Drawings

Fig. 1 is a block diagram of an interactive text processing
system embodying the present invention;

Fig. 2 is a functional diagram of the microprocessor shown in
Fig. 1.;

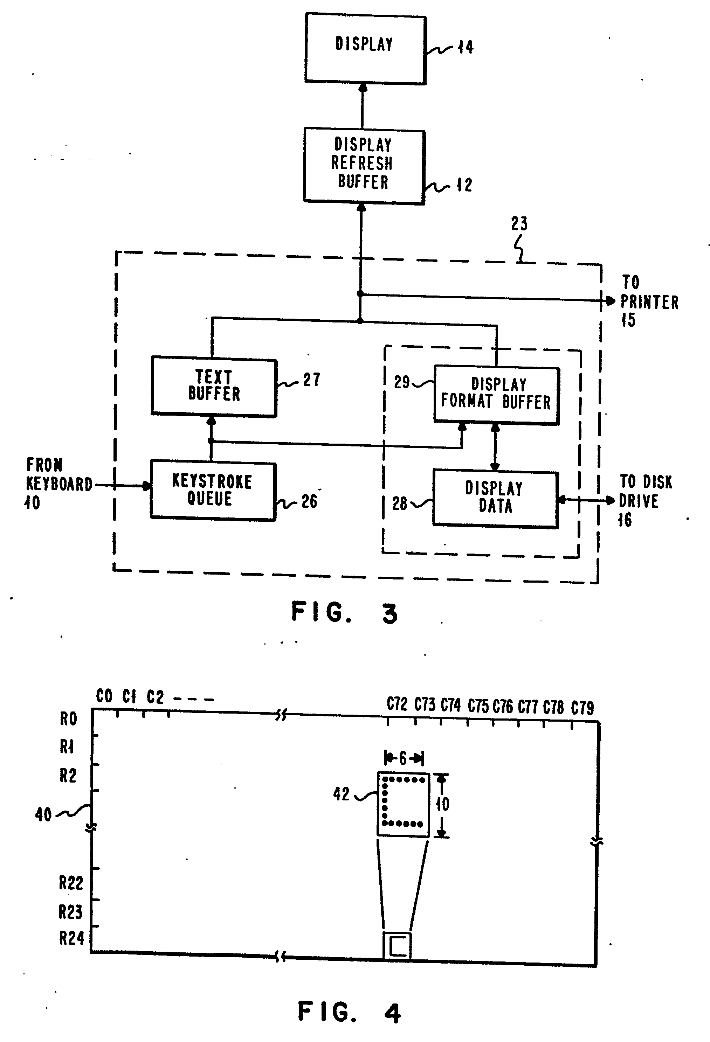

Fig. 3 is a functional diagram illustrating the data flow path
between portions of the memory and the microprocessor and the
display refresh buffer;

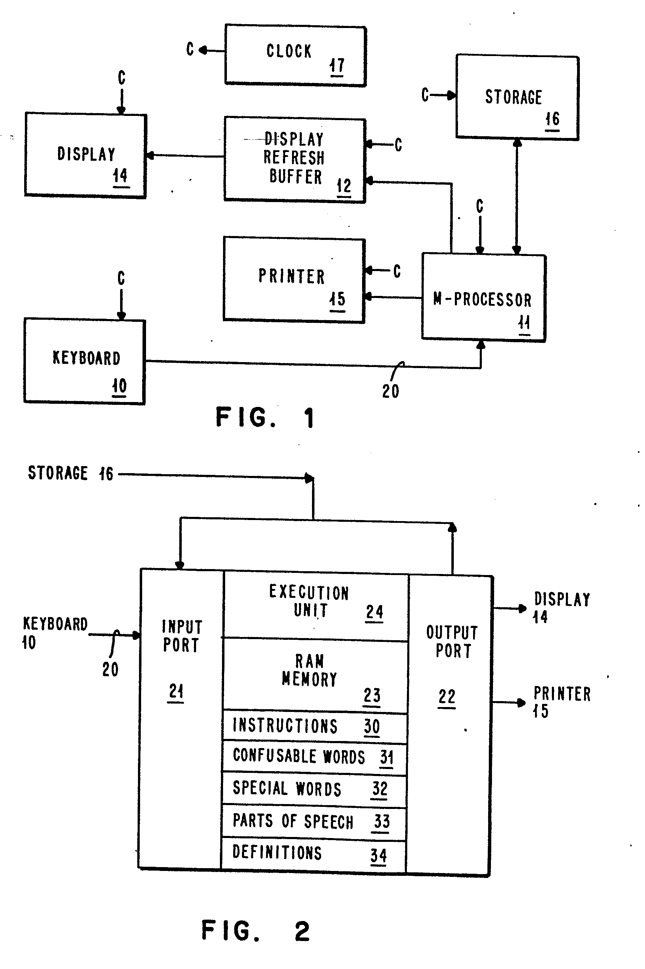

Fig. 4 is a diagrammatic view of the display shown in Fig. 1;

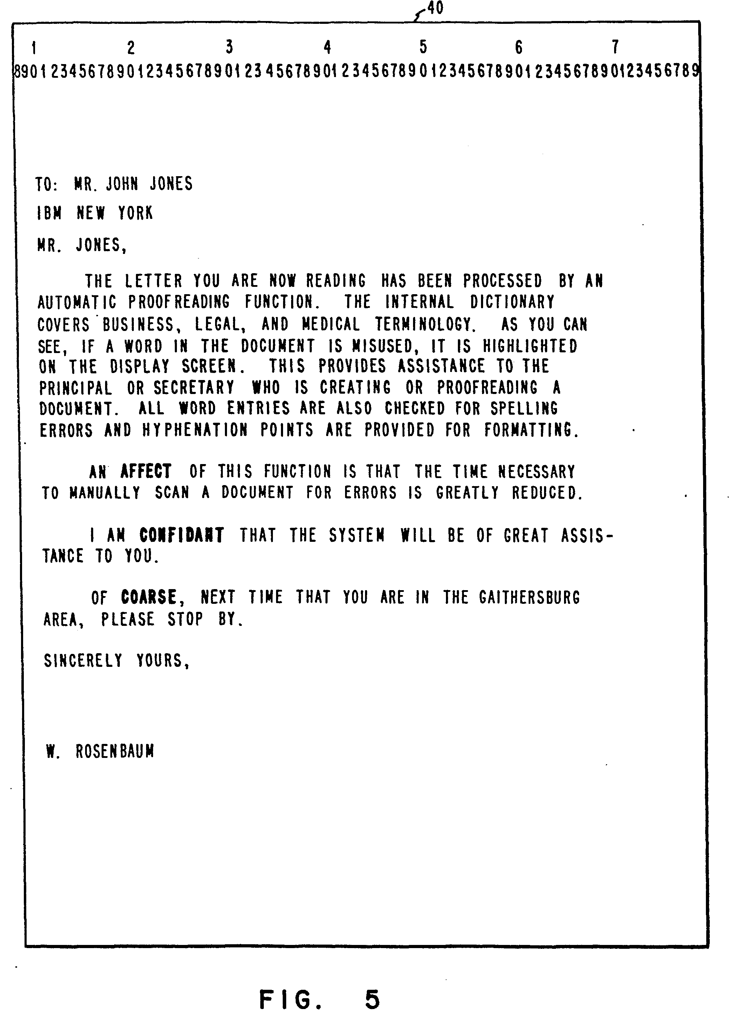

Fig. 5 illustrates the presentation of a text document on the
display screen of Fig. 4; and

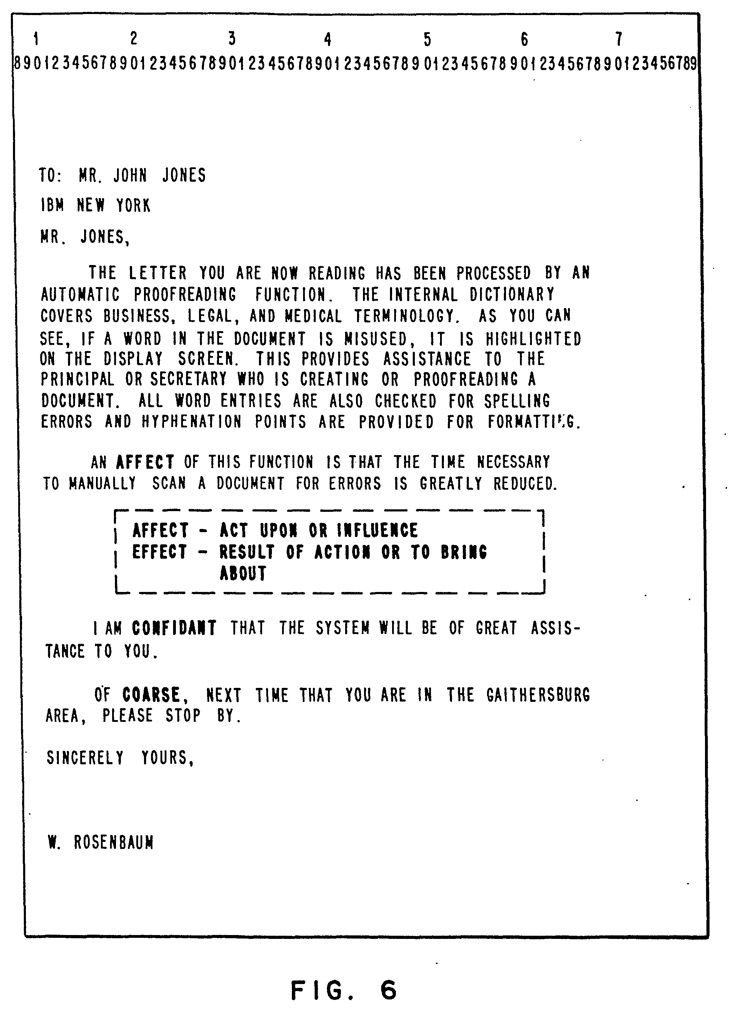

Fig. 6 illustrates the display of the document as it would
appear on the display device during operation of the proofreading function of the present invention.

Best Mode for Carrying Out the Invention

The invention will now be described as embodied in an interactive text processing system of the type shown in Fig. 1. As
shown in Fig. 1, the text processing system illustrated therein
comprises a keyboard 10, a microprocessor 11, a display refresh buffer 12, a display device 14, a printer 15, and an auxiliary direct access storage device 16 such as a disk or diskette drive. A clock 17, for keeping the various components of the system in synchronism, is also shown in Fig. 1 and is effectively coupled to each of the units.

Keyboard 10 comprises a normal set of graphic symbol keys such as letters, numbers, punctuation marks, and special character keys, plus text format or control keys including carriage return, tab, index, etc. In addition, the keyboard 10 includes a second set of control keys for issuing special control commands to the system. The control keys include cursor movement keys, keys for setting the keyboard 10 into a number of different modes, etc.

The keyboard 10 is connected to the microprocessor 11 by means of a bus 20. The microprocessor 11, as shown in Fig. 2, comprises an input port 21, an output port 22, a random access memory 23, and a process execution unit 24.

Functionally, memory unit 23 stores both instructions and data in specified sections which will be described in more detail later in the specification. Data is entered into a memory 23 from the keyboard 10 as bytes of binary information through input port 21. As shown in Fig. 3, the section of RAM 23 which receives the keystroke data from the keyboard 10 is designated keystroke queue 26. Data to be displayed is transferred by a series of instructions from queue 26 to the text buffer section 27 and then to the display refresh buffer 12 through output port 22 of the microprocessor 11. This is achieved in a conventional way by the microprocessor 11 executing a series of move instructions.

The microprocessor 11 may be an IBM Series 1, INTEL model 8086, or any of the recognized functionally equivalent, currently available microprocessors.

The display refresh buffer 12 is shown as a separate buffer
connected between the output port 22 and the display device 14.
Buffer 12, in practice, is normally a part of the display
device 14 and functions to control the generation of characters
on the screen of the display device 14 by exercising on-off
control of the beam as it traces a series of horizontal lines
across the screen.

The output port 22 also supplies data stored in memory 23 to
the printer 15 and disk storage unit 16, each of which may have
their own internal buffers which are not shown. Commands to
transfer data from the random access memory 23 to the printer
15 or storage unit 16 are sent to the microprocessor 11 by the
operator from the keyboard 10.

Printer 15 may be any suitable printer known in the art. In
most text processing systems, the printer 15 is basically a
standard input/output terminal printer having a type ball
element or a daisy-wheel print element.

Disk storage 16 may also be any suitable disk storage device
which is capable of storing serial by byte data supplied to it
at determined sector address locations, each of which are
randomly addressable by the microprocessor 11 to retrieve the
data. Spatially related data supplied from disk drive 16 is
stored in the display data area 28 of the memory 23 in encoded
form. Another section of memory 23 shown in Fig. 3 is the
display format buffer area 29 which is involved in the handling
of spatially related data in decoded form in accordance with
the method of the present invention.

Fig. 4 is a schematic representation of the screen 40 of display
device 14. As shown in Fig. 4, the screen 40 has, for example,
the capability of displaying 25 lines of characters (R0-R24)
where each line consists of 80 character column positions
(C0-C79). In practice, one character position consists of a
matrix of dot positions or picture elements sometimes referred
to as pels. A typical character matrix for a display of the type represented by device 14 would be a matrix of six wide by
ten high pels, which has been designated by reference character
42 in Fig. 4. The interaction of the refresh buffer 12 and the
display 14 is to convert the characters stored at a location in
the buffer 12 to the corresponding character as formed in a 6 x
10 dot matrix at the equivalent location on the display screen
40. Display 14 generally is provided with its own set of
electronics to achieve that conversion. The microprocessor 11
need only supply the address and load the buffer 12 with the
appropriate characters.

The disk storage device 16 also is generally provided with its
own set of electronics for converting a byte of data supplied
from the display data area 28 of memory 23 through the output
port 22 to a serial by bit stream of data to be recorded at a
predetermined sector of the one addressed concentric recording
track on the disk. Data from the device 16 is supplied to the
microprocessor 11 serial by byte from the addressed sector and
storage tracks when requested.

It will be understood that all of the above described functions
and interactions involving the microprocessor 11 are achieved
through suitable programs and data which are also stored in
memory 23 shown as memory blocks 30, 31, 32, 33 and 34 of Fig.
2 and which are called into operation in response to data from
the keyboard 10 or interrupt signals generated by the various
components of the system shown in Fig. 1.

The preferred embodiment of the present invention comprises a
set of instructions or programs for controlling a text processing system for reviewing the text input screen against the
entries in a confusable word list in memory 31 until a match is
found. The match condition against a word from the list causes
the processor 11 under control of the instructions in memory 30
to flag the word and apply rules associated with the word. This
processing may involve interaction with the contents of the
parts of speech information in memory 33 and/or with the special
word lists in memory 32 and the RAM memory 23. The processing continues under the control of the instructions of this invention until a conclusion can be drawn as to whether conditions
are met in the immediate region of the previously flagged word
to accept its use. If the conditions are met then no further
processing of the flagged word is performed. However, if the
conditions are not met, the processor 30 will obtain from
memory 34 the alternate words and definitions related to the
flagged word and display them to the operator. Flagging the
word may be done by displaying the word in reverse video,
underscoring the word, boxing the word, etc.

The confusable words are stored in sets in the memory section
31. Table 1 shows a sample listing of confusable words which
are stored in the memory 31. Each set of confusable words has a
related set of definitions shown in Table 2 and stored in
memory 34. The sets of confusable words and definitions represent
popular usage and definitions for the words.

Table 1

Partial List of Confusable Words

**** accept                              **** desert
     except                                   dessert
**** access                              **** formally
     excess                                   formerly
**** affect                              **** heal
     effect                                   heel
                                         **** hear
**** assistance                               here
     assistants                         **** instants
**** ballad                                   instance
     ballet                             **** later
     ballot                                   latter
**** bear                                **** pain
     bare                                     pane
**** brake                               **** pair
     break                                    pare
                                              pear

**** breach           **** precedence

                                precedents

   breech                 presidents

**** cite               **** saver

   site                   savor

   sight               **** stationary

**** coarse            stationery

**** to

   course                too

                                two

**** confidant         **** vane

                                vein

   confident           vain

**** decent

   descent              **** weak

   dissent                week

## Table 2

### Partial List of Definitions

**** (receive, understand)      **** (dry land)

    (exclude, object)            (food)

**** (right to use)             **** (conventionally)

    (oversupply, too much)     (before now)

**** (act or influence)        **** (mend)

    (result of action or         (of foot)

     to bring about)       **** (with the ear)

**** (help)                   (this place)

    (people who help)        **** (moments)

**** (song, poem)              (example)

    (dance)               **** (afterwards)

    (ticket)                (the last one)

**** (an animal, to carry)     **** (ache)

    (naked, empty)            (window)

**** (slow down, a thicket)   **** (a couple, two)

    (opening, to part,           (to peel)

     rest period)              (a fruit)

**** (infraction, breakthrough)
(part of a firearm)

**** (summons)
(place)
(view)

**** (crude, large particles)
(path, as might be expected)

**** (one to whom secrets are entrusted)
(certain, trustful)

**** (good)
(go down)
(disagreement)

**** (priority of rank)
(previous laws)
(heads of state)

**** (one who saves)
(taste, scent)

**** (fixed)
(paper supplies)

**** (toward)
(also)
(2)

**** (weathercock)
(blood vessel)
(proud, unsuccess-ful, worthless)

**** (feeble)
(7 days)

The rules for testing the confusable words are shown in Table 3 and stored in the memory section 32 as special words. The confusable word identified in text along with predefined sections of text preceding the confusable word and following the confusable word are examined to determine whether the confusable word is misused. It has been determined that a string of 11 words generally provides sufficient information to determine whether a word has been used properly. The confusable word is positioned as the "pivot" word in the string with 5 preceding and 5 following words. The rules in memory section 32 provide means for inspecting the text surrounding the pivot word for specific words, words ending in specific characters, words terminated by a blank, comma, or period, words which are a particular part of speech, capitalized words, numbers, or proper nouns.

Table 3

Special Words

xxx                    Implemented Rule Operands

```
= "xxxxx"        The word exactly matches the string
                 within the quotes.
= NOUN
= PRONOUN
= ADJECTIVE
= VERB           The word matches the part of
= ADVERB         speech.
= CONJUNCTION
= PREPOSITION
= ℓ+"xxx"        The word ends with the string within
                 the quotes.
= ℓ-"xxx"        The word begins with the string within
                 the quotes.
= PERIOD         The word is delimited by a period.
= COMMA          The word is delimited by a comma.
= BLANK          The word is delimited by a blank.
= NUMERIC        The word is numeric.
= CAPITAL        The word is capitalized.
= NAME           The word is a proper name (not in the
                 dictionary).
```

***  This is word set number 1, and is referenced by
     '#1'.

| | | | |
|---|---|---|---|
| a | the | them | these |
| an | that | this | those |

***  This is word set number 2, and is referenced by
     '#2'.

| | | | |
|---|---|---|---|
| my | his | its | their |
| her | our | your | |

***  This is word set number 3, and is referenced by
     '#3'.

| | | | |
|---|---|---|---|
| can | must | would | should |
| may | need | could | shall |
| did | needs | might | will |
| please | | | |

***  This is word set number 4, and is referenced by
     '#4'.

| I | your | it | they |
|---|------|-----|------|
| we | he | she | |

*** This is word set number 5, and is referenced by
     '#5'.

| zero | three | six | nine |
|------|-------|-----|------|
| one | four | seven | ten |
| two | five | eight | eleven |
| twelve | | | |

*** This is word set number 6, and is referenced by
     '#6'.

| January | April | July | October |
|---------|-------|------|---------|
| February | May | August | November |
| March | June | September | December |

*** This is word set number 7, and is referenced by
     '#7'.

| Sunday | Tuesday | Thursday | Saturday |
|--------|---------|----------|----------|
| Monday | Wednesday | Friday | |

*** This is word set number 8, and is referenced by
     '#8'.

| me | him | you |
|----|-----|-----|
| us | her | them |

*** This is word set number 9, and is referenced by
     '#9'.

| is | be | was | were |
|----|-----|-----|------|
| are | been | am | |

*** This is word set number 10, and is referenced by
     '#10'.

| first | fourth | seventh | tenth |
|-------|--------|---------|-------|
| second | fifth | eighth | eleventh |
| third | sixth | ninth | twelfth |

Each set of confusable words has stored in the memory 32 rules
specific to each member of the set. These follow the general
rules in the memory 32 and serve as pointers to the applicable
general rules for each word. The specific rules for a sample
set of confusable words is shown in Table 4. The "-" designations
in the rules indicates that the word following the equal sign
is tested for preceding the confusable word. For example, -1 =

"please" translates to "please accept" for the first word in
Table 4. The "+" designation indicates that the term following
the equal sign will be tested for following the confusable
word. For example, "+1 = PRONOUN means the word immediately
following the confusable word (pivot word) will be examined to
determine if it is a pronoun. This determination is made by
examining the word against a dictionary of correctly spelled
words stored in the RAM 23 in accordance with the teachings of
Patent US-A-3,995,254 issued 30 November 1976 to W.S. Rosenbaum
wherein the dictionary includes an additional code appended to
each word to indicate its part of speech. The rule +1 = #1
means that the word immediately following the pivot word will
be examined to determine if it matches one of the words in set
number 1 of Table 3.

As previously stated, a string of words surrounding the pivot
word may be examined. This means that the rule may contain
compound conditions. Compound conditions preceding the pivot
word are designated as -1 followed by -2, -3, etc. For example,
the last two terms in the rules for "course" are -1 = 'the'
and -2 = 'in'. This translates to "in the course". Likewise,
compound conditions following the pivot word are designated as
+1 followed by +2, +3, etc. It follows that the rule condition
may also be negative as well as positive. For example, satisfaction of a rule condition may require rejection of the pivot
word's use rather than acceptance.

Table 4


Word Rules


accept          -1 = 'please'
                -1 = 'not'
                -1 = 'cannot'
                -1 = 'to'
                -1 = #3
                -1 = ℓ+''11'
                -1 = ℓ+''d'
                -1 = ℓ+ 'n't'

```
               -1 = PRONOUN
               +1 = PRONOUN
               +1 = NOUN
               +1 = #1
except         +1 = 'for'
               -1 = NOUN
               +1 = NOUN
               +1 = NAME
               +1 = #7
               +1 = #8
access         +1 = 'to'
               -1 = 'to'
               -1 = 'direct'
               -1 = 'indirect'
               -1 = ADJECTIVE
               +1 = NOUN
               -1 = PRONOUN
               +1 = VERB
excess         -1 = 'an'
               -1 = 'in'
               +1 = 'of'
               +1 = 'of'
affect         -1 = 'to'
               -1 = 'not'
               -1 = 'may'
               -1 = 'will'
               -1 = ADVERB
               +1 = #1
effect         -1 = 'in'
               -1 = 'into'
               -1 = #1
               -1 = 'of'
               -1 = 'one'
               -1 = ADJECTIVE
      ...
      ...
      ...
```

0093249

```
attendance      +1 = 'is'
                +1 = 'was'
                -1 = #2
                +1 = PREPOSITION
                -1 = PREPOSITION
attendants      -1 = ADJECTIVE
                -1 = NUMERIC

        ...
        ...
        ...
ballad          +1 = 'of'
ballet          -1 = CAPITAL
                +1 = CAPITAL
ballot          +1 = 'box'
balm            -1 = 'soothing'
bomb            -1 = 'a'
                -1 = 'h'
                -1 = 'n'
                -1 = 'atomic'
                -1 = 'neutron'
                -1 = 'hydrogen'
                -1 = 'nuclear'
                -1 = 'terrorist'
                -1 = 'to'
                -1 = '1b.'
                +1 = 'explosion'
                +1 = 'damage'
                +1 = 'load'
                +1 = 'blast'
                +1 = 'run'

        ...
        ...
        ...

brake           -1 = 'front'
                -1 = 'rear'
                -1 = 'emergency'
                +1 = 'lining'
                +1 = 'failure'
```

```
break          +1 = #1
               +1 = 'in'
               +1 = 'into'
               -1 = 'to'
               +1 = 'point'
               -2 = 'for'
               -1 = #1
               -2 = 'take'
               -1 = #1

        ...
        ...
        ...
coarse         +1 = @='language'
               +1 = @-'manner'
               +1 = @-'texture'
               +1 = @-'cloth'
course         -1 = 'of'
               -1 = 'due'
               -1 = 'mid'
               -1 = @-'change'
               +1 = @-'change'
               -1 = ADJECTIVE
               -1 = #1
               -1 = #10
               -1 = NUMERIC
               +1 = #NUMERIC
               +1 = 'of'
               -1 = 'the'
               -2 = 'in'
confidant      -1 = 'personal'
               -2 = #2
confident      -1 = #9
               -1 = 'very'
               -1 = ADVERB

        ...
        ...
        ...
```

Referring now to Fig. 5, there is shown an example of a letter displayed on the screen 40 of the display 14. The display has highlighted the words "affect", "confidant" and "coarse" as possible misused words. In operation, the contextual error detection and correction function may be invoked in a text processing system through a conventional "menu" task selection function such as disclosed in Patent US-A-4,308,582, issued 29 December 1981 to David A. Berger and assigned to International Business Machines Corp.

In a menu task selection function, the text processing system displays to the operator a menu of functions that the system can perform. The operator may then select one or a combination of such functions through operation of cursor control and select or enter keybuttons on the system keyboard 10. For example, function to paginate, check spelling, hyphenate for formatting, and check contextual errors in a document could be invoked singularly or in any combination. As an alternative to menu task selection, the text processing system could be provided with a separate keybutton to invoke each of the functions that the system is capable of performing.

At any rate, once invoked, the contextual error routine sequentially scans each word in the text document and compares the words to the confusable words stored in the confusable word memory 31. A program listing for the main context analyzer routine is shown in Table 5 in pseudo code. The application and use of pseudo code is described in "An Introduction to Programming", (A Structural Approach Using PL/1 and PL/C-7), Second Edition, by Richard Conway and David Gries, Winthrop Publishers, Cambridge, Massachusetts, Copyright 1975.

**0093249**

## Table 5

BEGINSEGMENT (CONTEXT)


```
ENTER CONTEXT, USING PARAMETER LIST;
   SAVE THE ENTRY REGISTERS;
IF ENTERED FOR INITIALIZATION, THEN
   OBTAIN ACCESS TO STORAGE FILE FOR CONFUSABLE WORDS;
   OBTAIN ACCESS TO STORAGE FILE FOR PARTS OF SPEECH;
   OBTAIN ACCESS TO STORAGE FILE FOR SPECIAL WORDS
      LIST;
   OBTAIN ACCESS TO STORAGE FILE FOR DEFINITIONS;
   GET MAIN STORAGE SPACE FOR PARTS OF SPEECH LIST AND
      RECORD ADDRESS IN SCRATCH PAD;
   GET MAIN STORAGE SPACE FOR SPECIAL WORDS LIST AND
      RECORD ADDRESS IN SCRATCH PAD;
   BUILD PARTS OF SPEECH LIST IN MAIN STORAGE;
   BUILD SPECIAL WORDS LIST IN MAIN STORAGE;
   BUILD CONFUSABLE WORDS LIST IN MAIN STORAGE;
   BUILD DEFINITIONS LIST IN MAIN STORAGE;
   RELINQUISH ACCESS TO STORAGE FILE;
   IF INITIALIZATION WAS NOT SUCCESSFUL, THEN
      SET RETURN CODE FOR CALLER;
   ENDIF;
ENDIF;
IF ENTERED TO JUDGE SUITABLE USE OF WORD, THEN
   DO UNTIL END OF DOCUMENT
      IF WORD IS FOUND IN CONFUSABLE WORDS LIST, THEN
         CALL (RULESCK)
            TO APPLY ACCEPTANCE/REJECTION RULES FOR WORD;
         IF WORD IS JUDGED TO BE USED INCRORRECTLY, THEN
            FLAG WORD IN DISPLAY BUFFER AND IN PARAMETER
               LIST AS UNACCEPTABLE;
         ENDIF;
      ENDIF;
   ENDDO;
ENDIF;
```

```
IF ENTERED TO OBTAIN POTENTIAL SUBSTITUTION WORDS AND
   DEFINITIONS, THEN
   DO FOR EACH WORD FLAGGED ON DISPLAY AND IN PARAMETER
      LIST
      CALL (PROMPTPREP)
         TO CONSTRUCT SUBSTITUE WORDS AND SHORT
            DEFINITIONS;
      DISPLAY WORDS AND DEFINITIONS IN DISPLAY LIST;
      SUBSTITUTE CURSORED WORD IN DISPLAY LIST FOR
         FLAGGED WORD IN DISPLAY BUFFER AND PARAMETER
            LIST;
      SET RETURN CODE FOR CALLER;
   ENDDO;
ELSE
   RELEASE MAIN STORAGE OBTAINED FOR SPECIAL WORDS
      LIST;
   RELEASE MAIN STORAGE OBTAINED FOR CONFUSABLE WORDS
      LIST;
ENDIF;
RETURN
   (TO CALLER WITH UPDATED PARAMETER LIST)
ENDSEGMENT (CONTEXT)
```

As was previously stated, this routine is entered following a menu setup procedure which is overseen by the system control program which operates in a manner similar to that described in Patent US-A-4,308,582, previously referenced. The main context analyzer routine of Table 5 is structured to control the processor 11 to access from the disk storage file 16 the confusable words file, special words list file, parts of speech file, and definitions file and store these files in the sections 31, 32, 33 and 34 of the random access memory 23. In conventional information processing systems, program instructions and data are typically stored in direct access storage devices such as diskette and disk files until needed in the system random access memory. However, where the system random access memory size permits, the program instructions and data may be permanently stored in system electronic read-only memory or stored in system random access memory during initial program load.

Once the confusable words, special words, parts of speech and definitions have been stored in the memory sections 31, 32, 33 and 34 respectively, the context routine scans the displayed document word-by-word in the display refresh buffer 12 and compares each word to the words in the confusable words list. When a word in a document is found to match a word in the confusable words list then the context routine invokes the rules check routine shown in Table 6 to determine whether the word is properly used by comparing the context of the word with the rules in the special words memory 32. For example, referring to Fig. 5, the word "affect" is potentially misused in the second paragraph of the letter on display screen 40. The rules for determining the proper usage of affect are shown in Table 4. A comparison of the rules shown in Table 4 and stored in memory section 33 to the context surrounding affect in Fig. 5 shows no matches. This causes the rules check subroutine to set a condition to reject the use of the word "affect" and return control to the context routine where the word is flagged on the display and in the parameter list as having unacceptable use. The flagging on the display screen takes the form of boldface so the word can be easily located on the display screen by the operator. Alternatively, the word may be overstruck, or underscored, or enclosed in a box, or any other suitable means of highlighting the word on the display screen.

Table 6


BEGINSEGMENT (RULESCK)


```
ENTER RULESCK, USING PARAMETER LIST AND CONFUSABLE
  WORDS LIST ADDRESS FOR SELECTED WORD;
WHILE
  NOT END OF RULES
DO
  IF ADDRESS OF WORD RELATING TO RULE EXISTS IN
  PARAMETER LIST, THEN
    MOVE WORD RELATING TO RULE TO WORK AREA IN SCRATCH
      PAD;
    IF RULE APPLIES TO SPECIAL WORDS LIST, THEN
      LOCATE SPECIAL WORDS LIST ADDRESS IN MEMORY;
      IF WORD IN WORK AREA MATCHES WORD IN SPECIAL
        WORDS LIST, THEN
        MAKE NOTATION THAT RULE WAS TRUE;
      ELSE
        MAKE NOTATION THAT RULES WAS FALSE;
      ENDIF;
    ENDIF;
    IF RULE APPLIES TO LITERAL, THEN
      IF WORD IN WORK AREA MATCHES LITERAL CHARACTERS
        IN RULE ELEMENT, THEN
        MAKE NOTATION THAT RULE WAS TRUE;
      ELSE
        MAKE NOTATION THAT RULE WAS FALSE;
      ENDIF;
    ENDIF;
    IF RULE APPLIES TO PREFIX, THEN
      IF FIRST CHARACTERS OF WORD IN WORK AREA MATCH
        PREFIX CHARACTERS IN RULE ELEMENT, THEN
        MAKE NOTATION THAT RULE WAS TRUE;
      ELSE
        MAKE NOTATION THAT RULE WAS FALSE;
      ENDIF;
    ENDIF;
```

```
IF RULE APPLIES TO SUFFIX, THEN
   IF LAST CHARACTERS OF WORD IN WORK AREA MATCH
      SUFFIX CHARACTERS IN RULE ELEMENT, THEN
      MAKE NOTATION THAT RULE WAS TRUE;
   ELSE
      MAKE NOTATION THAT RULE WAS FALSE;
   ENDIF;
ENDIF;
IF RULE APPLIES TO PART OF SPEECH, THEN
   IF WORD IN WORK AREA IS PART OF SPEECH REQUIRED
      BY RULE, THEN
      MAKE NOTATION THAT RULE WAS TRUE;
   ELSE
      MAKE NOTATION THAT RULE WAS FALSE;
   ENDIF;
      IF RULE APPLIES SPECIAL HANDLING, THEN
      IF RULE APPLIES TO NAME, THEN
         IF PART OF SPEECH FOR WORD IN WORK AREA
            CANNOT BE DETERMINED, THEN
            MAKE NOTATION THAT RULE WAS TRUE;
         ELSE
            MAKE NOTATION THAT RULE WAS FALSE;
         ENDIF;
      ENDIF;
      IF RULE APPLIES TO BLANK, THEN
         IF WORD IN WORK AREA IS DELIMITED BY BLANK
            CHARACTER, THEN
            MAKE NOTATION THAT RULE WAS TRUE;
         ELSE
            MAKE NOTATION THAT RULES WAS FALSE;
         ENDIF;
      ENDIF;
      IF RULE APPLIES TO COMMA, THEN
         IF WORD IN WORK AREA IS DELIMITED BY COMMA
            CHARACTER, THEN
            MAKE NOTATION THAT RULE WAS TRUE;
         ELSE
            MAKE NOTATION THAT RULE WAS FALSE;
```

```
      ENDIF;
    ENDIF;
    IF RULE APPLIES TO PERIOD, THEN
       IF WORD IN WORK AREA IS DELIMITED BY
          PERIOD CHARACTER, THEN
          MAKE NOTATION THAT RULE WAS TRUE;
       ELSE
          MAKE NOTATION THAT RULE WAS FALSE;
       ENDIF;
    ENDIF;
    IF RULE APPLIES TO NUMERIC, THEN
       IF WORD IN WORK AREA IS NUMERIC, THEN
          MAKE NOTATION THAT RULE WAS TRUE;
       ELSE
          MAKE NOTATION THAT RULE WAS FALSE;
       ENDIF;
    ENDIF;
    IF RULE APPLIES TO CAPITAL, THEN
       IF FIRST CHARACTER OF WORD IN WORK AREA IS
          UPPER CASE, THEN
          MAKE NOTATION THAT RULE WAS TRUE;
       ELSE
          MAKE NOTATION  THAT RULE WAS FALSE;
       ENDIF;
    ELSE
       MAKE NOTATION THAT RULE WAS FALSE;
    ENDIF;
  ELSE
    MAKE NOTATION THAT RULE WAS FALSE;
  ENDIF;
ELSE
  MAKE NOTATION THAT RULE WAS FALSE;
ENDIF;
IF RULE IS INDEPENDENT OF OTHER RULES, THEN
  IF RULE IS TRUE, THEN
    IF RULE RELATES TO EQUAL CONDITION, THEN
       SET RETURN CONDITION TO ACCEPT WORD;
    ELSE
```

23  **0093249**

```
      SET RETURN CONDITION TO REJECT WORD;
    ENDIF;
  ENDIF;
ELSE
  IF RULE RELATES TO NOT EQUAL CONDITION, THEN
    IF RULE STATES ACCEPT, THEN
      SET RETURN CONDITION TO ACCEPT WORD;
    ELSE
      SET RETURN CONDITION TO REJECT WORD;
    ENDIF;
  ENDIF;
ENDIF;
IF RULE IS FIRST OF A MULTI-RULE SET, THEN
  RESET INDEX TO MULTI-RULE CONDITION AREA IN
  SCRATCH PAD;
ENDIF;
SET INDEXED MULTI-RULE CONDITION AREA TO NEGATIVE
  VALUE;
IF RULE RELATES TO EQUAL CONDITION, THEN
  IF RULE WAS TRUE, THEN
    SET INDEXED MULTI-RULE CONDITION AREA TO
    POSITIVE VALUE;
  ENDIF;
ELSE
  IF RULE WAS FALSE, THEN
    SET INDEXED MULTI-RULE CONDITION AREA TO
    POSITIVE VALUE;
  ENDIF;
ENDIF;
IF RULE IS LAST OF A MULTI-RULE SET, THEN
  IF MULTI-RULE CONDITION AREA TO EXTENT OF INDEX
    IS POSITIVE, THEN
      SET RETURN CONDITION TO ACCEPT WORD;
  ENDIF;
ELSE
  INCREMENT INDEX TO MULTI-RULE CONDITION AREA;
ENDIF;
IF CONDITION NOT SET TO ACCEPT WORD, THEN
```

```
      ESTABLISH POINTER TO APPLY NEXT RULE FOR WORD;
   ELSE
      RETURN TO CALLER WITH CONDITION SET TO ACCEPT
         WORD;
   ENDIF;
  ENDIF;
ENDDO;
ENDWHILE;
RETURN TO CALLER WITH CONDITION SET TO REJECT WORD;
ENDSEGMENT (RULESCK);
```

The context routine continues to scan the document word-by-word until each word in the document has been checked against the confusable word list. As can be seen in Fig. 5, the words "confidant" in the third paragraph and "coarse" in the last paragraph are also highlighted (flagged) as being potentially misused.

When the end of the document is reached, the main context routine scans to determine if any confusable words were identified. If confusable words were identified as appearing in the document the context routine invokes the prompt preparation routine shown in Table 7 to display the confusable words and definitions for the potentially misused word. Referring to Fig. 6, the confusable words "affect" and "effect" along with their short definitions are shown in bold-face and surrounded by a dotted line rectangle following the second paragraph of the document. The operator can select the proper word for substitution into the document in place of the highlighted word by placing the display cursor underneath the word to be selected and pressing an enter key on the keyboard 10. The cursored word will then be substituted for the highlighted word in the text document and the program routine will procee to display the confusable words and definitions for the next highlighted word in text. The routine then continues processi the highlighted words until the end of the document is reache

**0093249**

Table 7


BEGINSEGMENT (PROMPTPREP)


```
ENTER PROMPTPREP, USING PARAMETER LIST AND CONFUSABLE
   WORDS LIST ADDRESS FOR SELECTED WORD;
OBTAIN ADDRESS TO BUILD WORD/DEFINITION LIST IN
   PARAMETER LIST;
OBTAIN RELATIVE RECORD ADDRESS OF RELATED WORD SET
   FROM CONFUSABLE WORDS LIST ENTRY;
WHILE
   NOT LAST WORD OF RELATED SET;
   DO
      READ NEXT RECORD FROM CONFUSABLE WORDS LIST AND
         DEFINITIONS LIST;
      INCLUDE WORD AND DEFINITION IN PARAMETER LIST TO
         RETURN TO CALLER;
   ENDDO;
ENDWHILE;
RETURN TO CALLER;
ENDSEGMENT (PROMPTREP);
```


While the invention has been particularly shown and described
with reference to a preferred embodiment, it will be understood
by those skilled in the art that various changes by equivalent
means may be made such as for example using other type of
memories or Input/Output devices without departing from the
scope of this application as defined by the claims.

0093249

CLAIMS

1.  A method for detecting and correcting contextual errors
    in a string of data segments in an information processing
    system characterized in that it comprises the steps of :

    a)    defining sets of confusable data segments;

    b)    defining contextual characteristics for each
    confusable data segment;

    c)    scanning a document for the presence of said
    confusable data segments;

    d)    comparing the data segments surrounding each
    confusable data segment in said document to the defined
    contextual characteristics for the confusable data
    segment;

    e)    highlighting each confusable data segment whose
    surrounding data segments do not compare with said
    defined contextual characteristics;

    f)    displaying a set of data segments related to
    each highlighted data segment; and

    g)    replacing the highlighted data segment in said
    document with a data segment from the related set of data
    segments.

2.  The method for detecting and correcting contextual errors
    according to Claim 1 characterized in that said step of
    displaying a set of data segments includes displaying a
    definition for each data segment in the displayed set.

3.  The method for detecting and correcting contextual errors
    according to Claim 1 or 2 characterized in that said step

**0093249**

or defining contextual characteristics includes the steps
of defining a set of usage rules specific to each confusable
data segment and defining sets of usage rules applicable
to a plurality of confusable data segments.

4.   The method for detecting and correcting contextual errors
     according to Claim 3 characterized in that said step of
     defining a set of usage rules specific to each confusable
     data segment includes defining multiple dependent rules
     which must be compounded before comparison to the data
     segments surrounding the confusable data segment.

5.   The method for detecting and correcting contextual errors
     according to any one of Claims 1 to 4 characterized in
     that said step of displaying a set of data segments
     related to each highlighted data segment includes displaying said set of related data segments in a highlighted
     format.

6.   A system for detecting and correcting contextual errors
     in a string of data segments in an information processor
     characterized in that it comprises :

          means for storing sets of confusable data segments;

          means for storing sets of contextual characteristics
     for each confusable data segment;

          display means;

          means for scanning a document on said display means
     for the presence of data segments equal to said confusable
     data segments;

          means for comparing the data segments surrounding
     each confusable data segment found in said document to
     the stored set of contextual characteristics for the
     confusable data segment;

means for highlighting the confusable data segment
on said display means when the compare is unequal;

means for displaying on said display means in
proximity to the highlighted confusable data segment a
set of data segments related to said confusable data
segment; and

means for replacing the highlighted confusable data
segment with a data segment from the related set of data
segments.

7. The system for detecting and correcting contextual errors
according to Claim 6 characterized in that said means for
storing sets of confusable data segments includes means
for storing definitions for each confusable data segment.

8. The system for detecting and correcting contextual errors
according to Claim 6 or 7 characterized in that said
means for highlighting the confusable data segments on
said display includes means for displaying said confusable
data segments in boldface.

9. The system for detecting and correcting contextual errors
according to any one of Claims 6 to 8 characterized in
that said means for storing sets of contextual characteristics includes means for storing a set of usage rules
specific to each confusable data segment and storing sets
of usage rules applicable to multiple ones of said
confusable data segments.

10. The system for detecting and correcting contextual errors
according to any one of claims 6 to 9 characterized in
that said means for replacing the highlighted confusable
data segment includes a keyboard, cursor control keys in
said keyboard for manipulating a cursor character on said
display means, and enter key means in said keyboard for generating a signal to replace the highlighted confusable
data segment with the related data segment located at the
cursor position.

FIG. 1

FIG. 2

FIG. 3

FIG. 4

~40

```
  1        2        3        4        5        6        7
8901234567890123456789012345678901234567890123456789012345678901234567899

   TO:  MR. JOHN JONES

   IBM  NEW YORK

   MR.  JONES,

       THE LETTER YOU ARE NOW READING HAS BEEN PROCESSED  BY AN
   AUTOMATIC PROOFREADING FUNCTION.  THE INTERNAL DICTIONARY
   COVERS BUSINESS, LEGAL, AND MEDICAL TERMINOLOGY.  AS YOU CAN
   SEE, IF A WORD IN THE DOCUMENT IS MISUSED, IT IS HIGHLIGHTED
   ON THE DISPLAY SCREEN.  THIS PROVIDES ASSISTANCE TO THE
   PRINCIPAL OR SECRETARY WHO IS CREATING OR PROOFREADING A
   DOCUMENT.  ALL WORD ENTRIES ARE ALSO CHECKED FOR SPELLING
   ERRORS AND HYPHENATION POINTS ARE PROVIDED FOR FORMATTING.

       AN AFFECT OF THIS FUNCTION IS THAT THE TIME NECESSARY
   TO MANUALLY SCAN A DOCUMENT FOR ERRORS IS GREATLY REDUCED.

       I AM CONFIDANT THAT THE SYSTEM WILL BE OF GREAT ASSIS-
   TANCE TO YOU.

       OF COARSE, NEXT TIME THAT YOU ARE IN THE GAITHERSBURG
   AREA,  PLEASE STOP BY.

   SINCERELY YOURS,



   W.  ROSENBAUM
```

# FIG. 5

```
     1          2          3          4          5          6          7
8901234567890123456789012345678901234567890123456789012345678901234567890123456789
```

TO: MR. JOHN JONES

IBM NEW YORK

MR. JONES,

    THE LETTER YOU ARE NOW READING HAS BEEN PROCESSED BY AN
AUTOMATIC PROOFREADING FUNCTION. THE INTERNAL DICTIONARY
COVERS BUSINESS, LEGAL, AND MEDICAL TERMINOLOGY. AS YOU CAN
SEE, IF A WORD IN THE DOCUMENT IS MISUSED, IT IS HIGHLIGHTED
ON THE DISPLAY SCREEN. THIS PROVIDES ASSISTANCE TO THE
PRINCIPAL OR SECRETARY WHO IS CREATING OR PROOFREADING A
DOCUMENT. ALL WORD ENTRIES ARE ALSO CHECKED FOR SPELLING
ERRORS AND HYPHENATION POINTS ARE PROVIDED FOR FORMATTING.

    AN **AFFECT** OF THIS FUNCTION IS THAT THE TIME NECESSARY
TO MANUALLY SCAN A DOCUMENT FOR ERRORS IS GREATLY REDUCED.

```
┌─────────────────────────────────────────────────┐
│  AFFECT - ACT UPON OR INFLUENCE                   │
│  EFFECT - RESULT OF ACTION OR TO BRING            │
│           ABOUT                                   │
└─────────────────────────────────────────────────┘
```

    I AM **CONFIDANT** THAT THE SYSTEM WILL BE OF GREAT ASSIS-
TANCE TO YOU.

    OF **COARSE**, NEXT TIME THAT YOU ARE IN THE GAITHERSBURG
AREA, PLEASE STOP BY.

SINCERELY YOURS,

W. ROSENBAUM

FIG. 6